(19) Europäisches Patentamt
European Patent Office
Office européen des brevets

(11) Veröffentlichungsnummer: **0 252 264 B1**

(12) **EUROPÄISCHE PATENTSCHRIFT**

(45) Veröffentlichungstag der Patentschrift: 02.05.91

(51) Int. Cl.⁵: **B32B 25/02**, C08L 9/04

(21) Anmeldenummer: 87107578.4

(22) Anmeldetag: 25.05.87

(54) Verbundwerkstoffe aus vorbehandeltem Fasermaterial und Vulkanisaten aus HNBR.

(30) Priorität: 05.06.86 DE 3618907

(43) Veröffentlichungstag der Anmeldung:
13.01.88 Patentblatt 88/02

(45) Bekanntmachung des Hinweises auf die Patenterteilung:
02.05.91 Patentblatt 91/18

(84) Benannte Vertragsstaaten:
BE DE ES FR GB IT NL

(56) Entgegenhaltungen:
DE-A- 2 539 132
DE-A- 3 329 974
DE-A- 3 514 697
US-A- 4 643 938

(73) Patentinhaber: BAYER AG

W-5090 Leverkusen 1 Bayerwerk(DE)

(72) Erfinder: Obrecht, Werner, Dr.
Holdenberger Strasse 108
W-4130 Moers 2(DE)
Erfinder: Goossens, John, Jr.
Hebbelstrasse 5
W-5090 Leverkusen 1(DE)
Erfinder: Mirza, Jean, Dr.
Wolfheide 23
W-5068 Odenthal-Glöbusch 2(DE)
Erfinder: Pabst, Jürgen, Dr.
Eckernstrasse 32
W-5205 St. Augustin 2(DE)
Erfinder: Thörmer, Joachim, Dr.
Emil-Nold-Strasse 39
W-5090 Leverkusen(DE)
Erfinder: Szentivanyi, Zsolt, Dr.
Carl-Rumpff-Strasse 35
W-5090 Leverkusen(DE)

EP 0 252 264 B1

**Beschreibung**

Die Herstellung von Keilriemen, Zahnriemen, Transportbändern ist wohl bekannt. Diese Artikel bestehen aus einer Kombination von einem Trägermaterial aus Fasern (wie z.B. Polyamidgewebe, Polyestergewebe, Glascord, aromatischem Polyamidcord etc.) und aus mehreren Gummischichten. Es gibt andere Gummiartikel, die einen ähnlichen Aufbau haben, wie z.B. Membranen, Schläuche, Behälter, Blasen, Reifen etc. In allen Fällen ist es eine wichtige und nicht einfach zu lösende Aufgabe, die Bindung zwischen der Oberfläche des Trägermaterials und dem Gummi so fest zu gestalten, daß diese nicht die Schwachstelle in dem Verbundsystem darstellt.

Die heute im Normalfall benützten - auch bei der Reifenherstellung verwendeten - Trägermaterialien werden mit Hilfe von Latices ausgerüstet. Die Ausrüstungsschichten beinhalten mehrere chemisch unterschiedliche Bestandteile. So ist beispielsweise bei Glasfasern ein Schlichten der Oberfläche nötig, außerdem ist die Verwendung von Silan-Verbindungen empfehlenswert, auf denen die eigentliche Übergangsschicht dann erzeugt wird. Diese kann aus Polybutadien-Homo- oder -Copolymeren (z.B. mit Acrylnitril, Styrol, 2-Vinylpyridin), Chloropren-Homo- oder -Copolymeren oder deren Kombination bestehen. Weiterhin ist es oft angebracht, zusätzlich Harze, wie z.B. Resorcin-Harze mit Härtern (z.B. Formaldehyd) und gegebenenfalls Silan-Verbindungen in dieser Kombination zu verwenden.

Ein teil- oder vollhydrierter Nitrilkautschuk (HNBR) ist in mehreren Anmeldungen beschrieben (z.B. DE-OS 2 539 132; DE-OS 3 329 974; DE-OS 3 046 008; 3 046 251; EP-A-111 412). Alle diese Schriften beschreiben ein Verfahren für die Herstellung eines teil- oder vollhydrierten NBR, der vulkanisierbar ist (z.B. mit Hilfe von Schwefel-Vulkanisationssystemen oder Peroxid-Vulkanisationssystemen). Der HNBR wird in Lösung hergestellt, die später in Festkautschuk überführt wird. Die Vulkanisate zeichnen sich durch hervorragende Hitze- und Ölbeständigkeit, durch ausgezeichnete mechanische Eigenschaften - auch bei höheren Temperaturen - und durch gute dynamische Eigenschaften aus. Interessanterweise ist bei einigen dieser Polymere, ähnlich zum Naturkautschuk, dehnungsinduzierte Kristallisation zu beobachten. Dies führt zu hervorragenden Festigkeiten und hohen Bruchdehnungen bei dem unvernetzten und ungefüllten Polymer.

Die mit klassischen Latices ausgerüsteten Gewebe zeigen deutliche Schwächen bei der Verwendung von peroxidisch vernetzten Vulkanisaten und teilhydrierten schwefelvernetzten HNBR-Typen, besonders nach einer Alterung.

Überraschenderweise wurde gefunden, daß Gewebe oder Cord, die mit HNBR-Polymeren oder mit Kombinationen dieser mit Vinylpyridin-Copolymeren ausgerüstet worden sind, die oben erwähnten Schwächen nicht zeigen.

Gegenstand dieser Patentanmeldung sind Gewebe oder Cord, die als Einzelfilament oder als fertiges Trägermaterial mit HNBR beschichtet sind und die daraus hergestellten Verbundwerkstoffe mit vulkanisiertem Kautschuk.

Die zur Beschichtung des Trägermaterials verwendeten HNBR-Typen weisen einen Nitrilgruppengehalt von 7 bis 27 Gew.-%, bevorzugt 20 bis 27 Gew.-%, besonders bevorzugt 7 bis 18 Gew.-%, auf. Der Gehalt an C-C-Doppelbindungen ist geringer als 40 pro 1000 C-Atome, bevorzugt geringer als 6 pro 1000 C-Atome, besonders bevorzugt geringer als 4 pro 1000 C-Atome, jedoch größer als 0,3 pro 1000 C-Atome.

Der zur Herstellung des HNBR verwendete Nitrilkautschuk (NBR) besitzt vorzugsweise eine statistische Verteilung der Monomereinheiten.

Die zur Beschichtung der Trägermaterialien verwendeten HNBR-Polymere können mit Harzen und Härtern und/oder Vinylpyridin-Copolymeren kombiniert werden, wobei der Anteil der Vinylpyridin-Copolymeren in der Komposition geringer als 50 Gew.-% ist. Zur Herstellung des HNBR-Latex wird das HNBR-Polymere in einem Lösungsmittel gelöst. Dieses Lösungsmittel, was auch ein Lösungsmittelgemisch sein kann, weist entweder eine geringe Wasserlöslichkeit auf und bildet mit Wasser ein Azeotrop mit über 50 % Anteil des Lösungsmittels oder die/das Lösungsmittel besitzen/ besitzt einen Siedepunkt unterhalb 95° C. Die organische Phase wird nach an sich bekannten Techniken unter Verwendung von anionischen, kationischen oder nicht-ionischen Emulgatoren oder Methylcellulose emulgiert.

Die zur Herstellung der Emulsionen verwendeten organischen Lösungsmittel bzw. Lösungsmittelgemische sind bzw. bestehen beispielsweise aus 3-Chlortoluol, Diisobutylketon, Methylisobutylketon, Methylisopropylketon.

Diesen Latices können auch Gemische von Harzen und Härtern zugegeben werden, wie beispielsweise Resorcinol und p-Formaldehyd.

Die beschichteten Gewebe werden in ein Gemisch aus HNBR-Kautschuk und üblichen Hilfsmitteln eingebettet und vulkanisiert. Übliche Hilfsmittel sind Vernetzer, z.B. peroxidisch vernetzende Systeme oder solche auf Schwefel-und/oder Thiuram-Basis. Die peroxidischen Systeme bestehen bevorzugt aus Triallyli-

2

socyanurat oder Triallylcyanurat (0,5 bis 3 phr) und einem Peroxid, dessen 10-Stunden-Halbwertzeit in Benzol über 115° C liegt. Ein Vulkanisationssystem bestehend aus 0,2 bis 0,6 phr Schwefel, 1,0 bis 4,0 phr Thiuram und 0,5 bis 2,0 phr Sulfenamid ist ebenfalls verwendbar. Hierbei wird unter Thiuram auch Thiuram-Monosulfid wie auch Di- oder Tetrasulfid, gegebenenfalls mit beliebigen Substituenten, wie z.B. Tetramethylthiuram verstanden. Das Sulfenamid kann auch durch eine Mercaptoverbindung, beispielsweise Dibenzothiazyldisulfid ersetzt werden.

Der verwendete HNBR-Kautschuk besitzt vorzugsweise bei

a) mit Vernetzern auf Schwefelbasis vernetztem HNBR einen Nitrilgruppengehalt zwischen 14 und 24 Gew.-%, bevorzugt 15 bis 18 Gew.-%, der Gehalt an C-C-Doppelbindungen beträgt 2 bis 7 Doppelbindungen pro 1000 C-Atome, bevorzugt 3 bis 5 Doppelbindungen pro 1000 C-Atome,

b) mit peroxidischen Vernetzern vernetztem HNBR einen Nitrilgruppengehalt zwischen 14 und 24 Gew.-%, bevorzugt 15 bis 18 Gew.-%, der Gehalt an C-C-Doppelbindungen beträgt weniger als 7 Doppelbindungen pro 1000 C-Atome, bevorzugt 0,5 bis 3 Doppelbindungen pro 1000 C-Atome.

Basismischungen:

| | A | B | C | D | E |
|---|---|---|---|---|---|
| HNBR I *) | – | 100 | – | 100 | – |
| HNBR II **) | 100 | – | 100 | – | 100 |
| ZnO | 2 | 2 | 2 | 2 | 2 |
| MgO | 3 | 3 | 3 | 3 | 3 |
| Ruß N550 | 45 | 45 | – | – | – |
| Ruß N774 | – | – | 65 | 65 | 65 |
| Polyether-Thioether | 5 | – | 5 | – | 5 |
| Phenol-Formaldehyd Vorkondensat | 5 | – | 5 | 2 | 5 |
| Styrolisiertes Diphenyl-amin | 1.5 | 1 | 1.5 | 1 | 1.5 |
| Zinksalz des Mercapto-imidazols | 2.5 | 0.4 | 2.5 | 0.4 | 2.5 |
| Triallylisocyanurat | – | 1.5 | – | 1.5 | – |
| Bis-(tert.-butylperoxy-isopropyl)-benzol | – | 7.0 | – | 7.0 | – |
| Schwefel | 0.5 | – | 0.5 | – | 1.0 |
| Tetramethylthiuram-disulfid (TMTD) | 2.0 | – | 2.0 | – | – |
| Benzothiazoyl-2-cylo-hexylsulfenamid (CBS) | 0.5 | – | 0.5 | – | 1.0 |
| Tetramethylthiurammono-sulfid (TMTM) | – | – | – | – | 1.0 |

| Abk. | | HNBR I | HNBR II |
|------|--|--------|---------|
| NG | Nitrilgruppengehalt (Gew.-%) | 17 | 17 |
| ME | Mooney Viskosität (ML1-4/100° C) ME | 74 | 70 |
| DG | Restdoppelbindungsgehalt/ 1000 Kohlenstoffatome | 2 | 6 |

Beispiel 1

Es wurde eine 8 %ige 3-Chlortoluollösung eines HNBR (NG = 17; 75 ME; DG = 2) durch Lösen bei 50° C hergestellt.

Polyvinylacetat (PVA) (Acetatgehalt:12 Mol-% Molekulargewicht ($M_w$) 80.000) wurde in entmineralisiertem Wasser gelöst.

1.500 g PVA-Lösung (1 gew.-%ig) und

1.600 g der HNBR-Lösung wurden mit Hilfe eines schnelllaufenden Rührwerks (10.000 Upm) zusammengerührt (Mischzeit 5 Min).

Die entstandene Emulsion wurde in einem Rotationsverdampfer unter erniedrigtem Druck (2 mPa) (15 Torr) von dem Lösungsmittel befreit, das azeotrop abdestillierte Wasser wurde teilweise ersetzt, so daß die entstandene Emulsion einen Feststoffgehalt von 13 Gew.-% hatte.

Es wurde ein Polyamid-Gewebe nach dem üblichen Tauchverfahren beschichtet.

Aus diesem Gewebe und - zum Vergleich - aus einem handelsüblichen Gewebe mit NBR-Beschichtung wurden mit den Basismischungen A und E bei 170° C/15 Min Vulkanisation Peel-Test-Probekörper (DIN 53 530) hergestellt.

### Abschälkraft [N/25 mm]

| | HNBR-Beschichtung | NBR-Beschichtung |
|--|-------------------|------------------|
| Mischung A | 260 | 220 |
| Mischung E | 240 | 200 |

Beispiel 2

Eine 5 gew.-%ige HNBR-Lösung (NG = 24; ME = 85; DG = 1) in Methylethylketon wurde hergestellt. Auf 100 g Lösung wurden 0,6 g Resorcinol und 0,3 g p-Formaldehyd zugesetzt. Durch ein übliches Tauchverfahren wurde ein Polyamid-Gewebe beschichtet. Aus der Basismischung B und dem beschichteten Gewebe wurden analog DIN 53 530 Probekörper hergestellt.

Vulkanisation: 170° C/20 Min.

5

Ein Teil der Probekörper wurde bei 150°C (Heißluft) während 3 Tagen gealtert. Zum Vergleich wurden auf gleiche Weise Probekörper mit Handelsüblichem Polyamidgewebe hergestellt (SBR-Pyratex).

## Abschälkraft [N/25 mm)

|  | HNBR-Beschichtung | SBR-Pyratex Beschichtung |
|---|---|---|
| ohne Alterung | 280 | 160 |
| nach Alterung (3 Tage 150° C) | 300 | 120 |

Beispiel 3

Analog zu Beispiel 1 wurde eine Emulsion aus einer HNBR-Lösung (12 Gew.-% in Methylisopropylketon) hergestellt (NG = 17; ME = 70; DG = 7). Als Emulgator wurde PVA verwendet (Acetatgehalt: 17 Mol-%; Molgewicht ($M_w$) 82.000; PVA-Konzentration in Wasser:1,4 Gew.-%).

Der Feststoffgehalt der von dem Lösungsmittel befreiten Emulsion betrug 19 %. Die mittlere Teilchengröße betrug 480 μm.

Mit der Emulsion wurde Glascord beschichtet und mit den Basismischungen C und D wurden Prüfkörper für den T-Test (vgl. BAYER-Mitteilungen für die Gummiindustrie Nr. 29) bei 170°C und 20 Minuten Vulkanisationszeit hergestellt (Cordeinbettlänge: 20 mm). Die Proben wurden bei 150°C während 3 h getempert.

Zum Vergleich wurden Prüfkörper auf chloroprenbeschichtetem Glascord auf gleiche Weise hergestellt.

## Ausreißkraft [N]

|  | HNBR-Beschichtung | Chloropren-Beschichtung |
|---|---|---|
| Mischung C | 360 | 310 |
| Mischung D | 330 | 280 |

Beispiel 4

Analog Beispiel 1 wurde eine Emulsion hergestellt HNBR (NG = 20; ME = 86; DG = 7). Lösungsmittel: 3-Cl-Toluol, Konzentration 10 Gew.-%.

Emulgator: Ein Gemisch aus Abietinsäure- und Dehydroabietinsäure-Derivaten, ®DRESINATE 731, Konzentration im Wasser: 1,6 Gew.-%.

Der Feststoffgehalt der von dem Lösungsmittel befreiten Emulsion betrug 16 Gew.-%. Es wurde Glascord beschichtet. Für die Herstellung der T-Test Prüfkörper wurde die Basismischung E verwendet. Vulkanisation 170° C/15 Minuten; Temperung 150° C/3 Stunden; Cordeinbettlänge: 20 mm.

Zum Vergleich wurden auf gleiche Art Probekörper auf NBR-beschichtetem Glascord hergestellt.

**Zum Vergleich wurden auf gleiche Art Probekörper auf NBR-beschichtetem Glascord hergestellt.**

|                          | Beschichtung |       |
| ------------------------ | ------------ | ----- |
| **Basismischung E auf:** | **HNBR**     | **NBR** |
| **Ausreißkraft [N]**     | **600**      | **450** |

Beispiel 5

Analog Beispiel 4 wurde eine Emulsion hergestellt, wobei das verwendete Lösungsmittel und der Emulgator variiert wurden:

| Lösungsmittel | Stabilität der Emulsion Emulgator: | |
| --- | --- | --- |
| | ®DRESINATE 731 | ®AEROSOL OT-B ®NATROSOL 250HR 1:1-Gemisch |
| Aceton | - | - |
| 3-Chlortoluol | ++ | ++ |
| Diisobutylketon | ++ | ++ |
| Methylisobutylketon | ++ | ++ |
| Methylethylketon | - | - |
| Tetrahydrofuran | - | - |
| Dimethylformamid | - | - |
| Methylisopropylketon | +/- | + |

(-)    keine beständige Emulsion erhältlich

(+)    geringfügige Abscheidungen; Emulsion bedingt verwendbar

(++)   Emulsion ist stabil und uneingeschränkt verwendbar.

®DRESINATE 731, Abieto-Chemie, Gersthofen, (Gemisch aus Abietinsäure- und Dehydroabietinsäurederivaten)

®AEROSOL OT-B, American Cyanamid, (Natriumsalz der Dioctylsulfobernsteinsäure)

®NATROSOL 250HR Hercules, Lancaster (GB), (Carboxylierte Methylcellulose)

Aus der Tabelle ist ersichtlich, daß als Lösungsmittel für HNBR 3-Chlortoluol, Diisobutylketon und Methylisobutylketon, bedingt auch Methylisopropylketon, zur Herstellung der erfindungsgemäßen HNBR-Emulsion geeignet sind.

## Ansprüche

1.  Verbundwerkstoff, bestehend aus
    a) aus Fasern hergestelltem Trägermaterial, das mit vulkanisiertem hydrierten Nitrilkautschuk, der einen Nitrilgruppengehalt von 7 bis 27 Gew.-% aufweist und einen C-C-Doppelbindungsgehalt von weniger als 40 pro 1000 C-Atome besitzt, beschichtet ist, und
    b) aus einer oder mehreren Gummischichten, bestehend aus hydriertem Nitrilkautschuk und üblichen Hilfsmitteln wie Füllstoffen, Weichmachern, Verarbeitungshilfsmitteln, Vulkanisationsmitteln.

2.  Verbundwerkstoffe gemäß Anspruch 1, dadurch gekennzeichnet, daß das unter (a) bezeichnete Trägermaterial mit hydriertem Nitrilkautschuk in Kombination mit Harzen und Härtern beschichtet ist.

3. Verbundwerkstoffe gemäß Anspruch 1, dadurch gekennzeichnet, daß das unter (a) bezeichnete Trägermaterial mit hydriertem Nitrilkautschuk in Kombination mit Harzen und Härtern und/oder VinylpyridinCopolymeren beschichtet ist, wobei der Anteil der Vinylpyridin-Copolymeren in der Komposition weniger als 50 Gew.-% beträgt.

4. Verbundwerkstoffe gemäß Ansprüchen 1 bis 3, dadurch gekennzeichnet, daß das Trägermaterial aus einer Latexphase beschichtet wurde, wobei der Feststoff des Latex aus einem hydrierten Nitrilkautschuk oder dessen Kombination mit Harz und Härter und/oder Vinylpyridin-Copolymeren gemäß Ansprüchen 1 bis 3 besteht.

5. Verbundwerkstoffe gemäß Anspruch 1, dadurch gekennzeichnet, daß der unter (b) beschriebene hydrierte Nitrilkautschuk einen Nitrilgruppengehalt von 14 bis .24 Gew.-% und einen Gehalt an C-C-Doppelbindungen von 2 bis 7 Doppelbindungen pro 1000 C-Atome aufweist.

6. Verbundwerkstoff gemäß Anspruch 1, dadurch gekennzeichnet, daß der unter (b) bezeichnete hydrierte Nitrilkautschuk mit einem Vulkanisationssystem bestehend aus 0,2 bis 0,6 phr Schwefel, 1,0 bis 4,0 phr Thiuram und 0.5 bis 2,0 phr Sulfenamid vulkanisiert wird.

7. Verbundwerkstoff gemäß Anspruch 6; dadurch gekennzeichnet, daß das Vulkanisationssystem statt 0,5 bis 2,0 phr Sulfenamid 0,5 bis 2 phr einer Mercaptoverbindung enthält.

8. Verbundwerkstoffe gemäß Anspruch 1, dadurch gekennzeichnet, daß der in (b) beschriebene hydrierte Nitrilkautschuk einen Nitrilgruppengehalt von 14 bis 24 Gew.-% und einen Gehalt an C-C-Doppelbindungen von weniger als 7 Doppelbindungen pro 1000 C-Atome aufweist und die Vulkanisation mit Hilfe eines peroxidischen Vulkanisationssystems durchgeführt wird.

9. Verbundwerkstoffe gemäß Anspruch 8, dadurch gekennzeichnet, daß das peroxidische Vulkanisationssystem aus 0,5 bis 3,0 phr Triallylisocyanurat oder Triallylcyanurat und einem Peroxid, dessen 10-Stunden-Halbwertzeit in Benzol über 115° C liegt, besteht.

## Claims

1. A composite material consisting of
   a) a fibrous support material coated with vulcanized hydrogenated nitrile rubber having a nitrile group content of 7 to 27% by weight and a C-C double bond content of less than 400 per 1000 C atoms and
   b) one or more rubber layers consisting of hydrogenated nitrile rubber and typical auxiliaries, such as fillers, plasticizers, processing aids, vulcanizing agents.

2. Composite materials as claimed in claim 1, characterized in that the support material (a) is coated with hydrogenated nitrile rubber in combination with resins and catalysts.

3. Composite materials as claimed in claim 1, characterized in that the support material (a) is coated with hydrogenated nitrile rubber in combination with resins and catalysts and/or vinyl pyridine copolymers, the percentage content of vinyl pyridine copolymers in the composition being less than 50% by weight.

4. Composite materials as claimed in claims 1 to 3, characterized in that the support material was coated from a latex phase, the latex solids consists of a hydrogenated nitrile rubber or a combination thereof with resin and catalyst and/or vinyl pyridine copolymers according to claims 1 to 3.

5. Composite materials as claimed in claim 1, characterized in that the hydrogenated nitrile rubber (b) has a nitrile group content of 14 to 24% by weight and a C-C double bond content of 2 to 7 double bonds per 1000 C atoms.

6. A composite material as claimed in claim 1, characterized in that the hydrogenated nitrile rubber (b) is vulcanized with a vulcanization system consisting of 0.2 to 0.6 phr sulfur, 1.0 to 4.0 phr thiuram and 0.5 to 2.0 phr sulfenamide.

7. A composite material as claimed in claim 6, characterized in that the vulcanization system contains 0.5 to 2 phr of a mercapto compound instead of 0.5 to 2.0 phr sulfenamide.

8. Composite materials as claimed in claim 1, characterized in that the hydrogenated nitrile rubber (b) has a nitrile group content of 14 to 24% by weight and a C-C double bond content of less than 7 double bonds per 1000 C atoms and vulcanization is carried out with a peroxidic vulcanization system.

9. Composite materials as claimed in claim 8, characterized in that the peroxidic vulcanization system consists of 0.5 to 3.0 phr triallyl isocyanurate or triallyl cyanurate and a peroxide of which the 10-hour half life in benzene is above 115° C.

## Revendications

1. Matériau composite, constitué
   a) d'une matière de support en fibres qui est revêtue de caoutchouc nitrilique hydrogéné vulcanisé qui présente une teneur en groupes nitrile de 7 à 27 % en poids et une teneur en doubles liaisons carbone-à-carbone de moins de 40 pour 1000 atomes de carbone, et
   b) d'une ou plusieurs couches de caoutchouc constituées d'un caoutchouc nitrilique hydrogéné et d'adjuvants classiques tels que des charges, des plastifiants, des adjuvants de mise en oeuvre, des agents vulcanisants.

2. Matériaux composites suivant la revendication 1, caractérisés en ce que la matière de support indiquée en (a) est revêtue de caoutchouc nitrilique hydrogéné en association avec des résines et des agents durcissants.

3. Matériaux composites suivant la revendication 1, caractérisés en ce que la matière de support indiquée en (a) est revêtue de caoutchouc nitrilique hydrogéné en association avec des résines et des agents durcissants et/ou des copolymères de vinylpyridine, la proportion de copolymères de vinylpyridine dans la composition étant inférieure à 50 % en poids.

4. Matériaux composites suivant les revendications 1 à 3, caractérisés en ce que la matière de support a été revêtue d'une phase de latex, la matière solide du latex étant constituée d'un caoutchouc nitrilique hydrogéné ou de son association avec une résine et un agent durcissant et/ou des copolymères de vinylpyridine selon les revendications 1 à 3.

5. Matériaux composites suivant la revendication 1, caractérisés en ce que le caoutchouc nitrilique hydrogéné décrit en (b) présente une teneur en groupes nitrile de 14 à 24 % en poids et une teneur en doubles liaisons carbone-à-carbone de 2 à 7 doubles liaisons pour 1000 atomes de carbone.

6. Matériau composite suivant la revendication 1, caractérisé en ce que le caoutchouc nitrilique hydrogéné indiqué en (b) est vulcanisé avec un système de vulcanisation constitué de 0,2 à 0,6 partie de soufre pour 100 parties de caoutchouc, 1,0 à 4,0 parties de thiuram pour 100 parties de caoutchouc et 0,5 à 2,0 parties de sulfénamide pour 100 parties de caoutchouc.

7. Matériau composite suivant la revendication 6, caractérisé en ce que le système de vulcanisation contient 0,5 à 2 parties, pour 100 parties de caoutchouc, d'un composé mercapto au lieu de 0,5 à 2,0 parties, pour 100 parties de caoutchouc, de sulfénamide.

8. Matériaux composites suivant la revendication 1, caractérisés en ce que le caoutchouc nitrilique hydrogéné décrit en (b) présente une teneur en groupes nitrile de 14 à 24 % en poids et une teneur en doubles liaisons carbone-à-carbone de moins de 7 doubles liaisons pour 1000 atomes de carbone et la vulcanisation est effectuée à l'aide d'un système vulcanisant peroxydique.

9. Matériaux composites suivant la revendication 8, caractérisés en ce que le système vulcanisant peroxydique est constitué de 0,5 à 3,0 parties, pour 100 parties de caoutchouc, d'isocyanurate de triallyle ou de cyanurate de triallyle et d'un peroxyde dont le temps de demi-vie à 10 heures dans le benzène est au-dessus de 115° C.